Europäisches Patentamt

European Patent Office

Office européen des brevets

(11) Publication number: **0 432 883 A1**

## EUROPEAN PATENT APPLICATION

(21) Application number: 90311605.1

(51) Int. Cl.$^5$: **G01N 9/00**

(22) Date of filing: 23.10.90

(30) Priority: 25.10.89 US 427063

(43) Date of publication of application:
**19.06.91 Bulletin 91/25**

(84) Designated Contracting States:
**DE FR GB IT**

(71) Applicant: INTERNATIONAL CONTROL
AUTOMATION FINANCE S.A.
16 Rue des Bains
Ville de Luxembourg(LU)

(72) Inventor: **Kaya, Azmi**
**2365 Woodpark Raod**
**Akron, Ohio 44313(US)**
Inventor: **Keyes, Marion Alvah IV**
**120 Riverstone Drive**
**Chagrin Falls, Ohio 44022(US)**

(74) Representative: **Cotter, Ivan John et al**
**D. YOUNG & CO. 10 Staple Inn**
**London WC1V 7RD(GB)**

(54) **Determining fluid properties.**

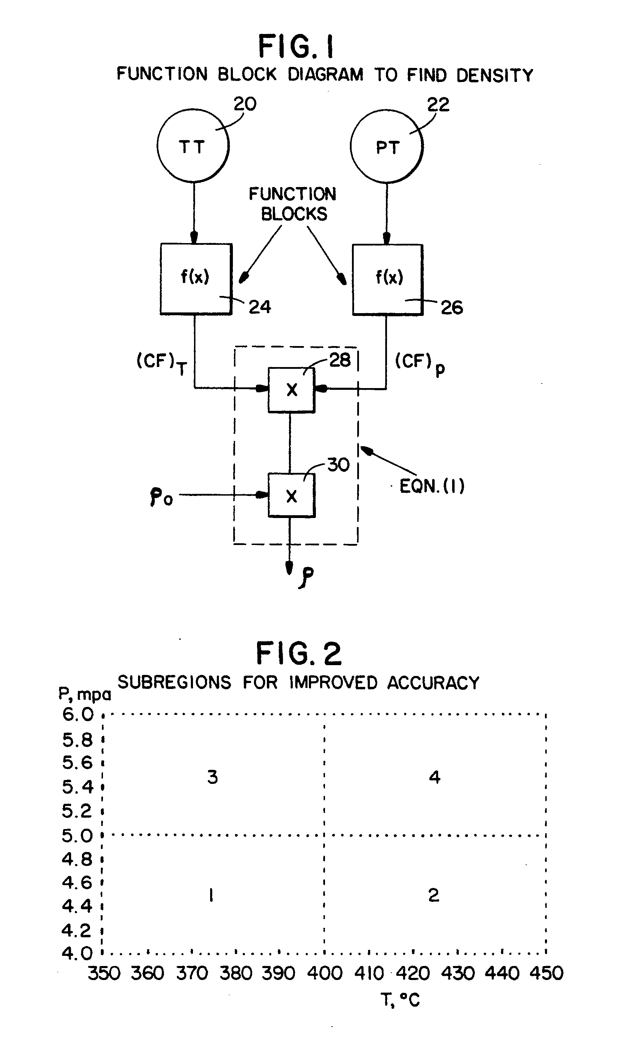

(57) In a method of on-line measurement of fluid properties, the temperature range and pressure range to which the fluid might be exposed is divided into predetermined subregions (1 to 4 in Figure 2). The actual temperature and pressure of the fluid are measured (20, 22) and determine the subregion which is utilised. The subregion that is utilised provides temperature and correction factors $((CF)_T)$ and $((CF)_P)$ which are combined (28, 30) with a reference value $(\rho_0)$ of the fluid property being measured to determine the actual value $(\rho)$ of the fluid property.

## FIG.6
DENSITY LOGIC DIAGRAM FOR MULTIPLE SUBREGIONS

EP 0 432 883 A1

## DETERMINING FLUID PROPERTIES

This invention relates to determining properties of fluids.

The measurement of properties of fluids in real-time is critical in providing optimum operation of various types of energy systems. For example, methods exist for determining the properties of fluids, such as steam, by using the Beattie-Bridgeman equations or by using fluid tables stored in computer memories. It has been found that determining fluid properties by the Beattie-Bridgeman equations typically requires off-line techniques and high level computer programs. Although optimisation procedures can be implemented on-line for the Beattie-Bridgeman equations by utilising distributed computer systems, it has been found that this approach is very costly and that only steam properties can be determined by this approach, thus necessitating additional equations for other fluids. With respect to storing fluid tables in computer memories, such an approach requires extensive memory and the resulting costs makes this approach impractical.

An alternative approach for measuring fluid properties uses analog electronic devices for on-line real-time determinations of fluid properties. It has been found that this approach produces large measurement errors and that the analog devices utilised are hard to maintain. Another method which is an improvement over the foregoing analog approach is disclosed in US Patent No. US-A-4 244 216, in which fluid temperature and pressure measurements are multiplied by correction factors to find fluid density and enthalpy. This approach can be easily extended to measuring entropy. It has been found that this latter approach produces inaccurate measurements if the operation range of temperature and pressure is relatively large, which is usually the case. When temperature and pressure vary, the correction factors utilised in this approach cannot compensate for such variations and the magnitude of the errors in the resulting measurements increases.

Because of the foregoing, it has become desirable to develop a method which produces very accurate fluid property measurements, preferably in real-time.

According to the invention there is provided a method of determining the value of a property of a fluid, the method comprising the steps of:
measuring the temperature of the fluid;
measuring the pressure of the fluid;
assigning said temperature measurement and said pressure measurement to a pre-determined temperature and pressure subregion;
developing a temperature correction factor for the fluid;
developing a pressure correction factor for the fluid;
developing a reference value of the fluid property being measured; and
combining said temperature correction factor, said pressure correction factor and said reference value to determine the value of the fluid property being measured.

A preferred embodiment of the invention described hereinbelow solves or at least alleviates the problems associated with the prior art methods by providing a method of determining the values of particular properties of fluids with a high degree of accuracy and in real-time. The temperature and pressure of a fluid being tested are measured and the resulting measurements are placed in a subregion defined by a temperature range and a pressure range. A temperature correction factor and a pressure correction factor are determined by the subregion utilised. Similarly, a reference factor for the property being measured, such as density, is determined. The resulting factors, i.e. temperature correction factor, pressure correction factor, and reference factor, are combined to determine the value of the fluid property being measured. A dynamic correction factor can also be utilised in order to improve the accuracy of the resulting measurement of the fluid property being measured. There is thus provided a method or procedure for on-line measurement of fluid properties, which can for example be used for control and optimisation.

The invention will now be further described, by way of illustrative and non-limiting example, with reference to the accompanying drawings, in which:

Figure 1 is a function block logic diagram which can be utilised to determine the density of a fluid being tested;

Figure 2 is a graph illustrating pressure and temperature of the fluid being tested, the graph being divided into subregions to improve the accuracy of the resulting measurement of the fluid property being investigated;

Figure 3 is a graph of a temperature correction factor $(CF)_T$ versus temperature for the fluid being tested;

Figure 4 is a graph of a pressure correction factor $(CF)_P$ versus pressure for the fluid being tested;

Figure 5 illustrates logic blocks and temperature correction factors for subregions 1 and 2 of Figure 2;

Figure 6 is a logic diagram for multiple temperature and pressure subregions to determined the density of a fluid;

Figure 7 is a logic diagram of a subregion logic block illustrated in Figure 6;

Figure 8 is a logic diagram of a temperature correction logic block illustrated in Figure 6;

Figure 9 is a logic diagram of a reference logic block illustrated in Figure 6; and

Figure 10 is a graph of percentage error versus temperature, illustrating an improved measurement accuracy which can be achieved by utilising a dynamic correction factor.

Figure 1 is a logic diagram of functions required to determine the density of a fluid. The density determination utilises a temperature transmitter 20 and a pressure transmitter 22 having outputs connected to inputs to function blocks 24 and 26, respectively. Outputs of the function blocks 24 and 26 represent corrections factors $(CF)_T$ and $(CF)_P$ for the temperature and pressure, respectively, of the fluid being tested, and are applied as inputs to a multiplier 28 having an output connected to an input to a multiplier 30. Another input to the multiplier 30 represents the initial density $\rho_o$ of the fluid being tested. The multiplier (function block) 30 produces an output given by the following equation:

$$\rho = \rho_o(CF)_T\,(CF)_P \qquad (1),$$

where

$\rho$ = density;

$(CF)_T$; $(CF)_P$ = the corrections factors for T and P;

T = temperature; and

P = pressure. Also, the corrections factors are assumed to be represented by the equations:

$$(CF)_T = \rho\,(T, P_o)/\rho o \qquad (2)$$
$$(CF)_P = \rho(T_o, P)/\rho o \qquad (3),$$

where

$(T, P_o)$ = density values when T varies and P = $P_o$; and

$(T_o, P)$ = density values when P varies and T = $T_o$.

The foregoing correction factors can be illustrated by functional relationships (curves). It should be noted that the values for the correction factors $(CF)_T$ and $(CF)_P$ are unity for P = $P_o$ and T = $T_o$ - (reference values) and, in this case, it follows from Equation (1) that the density $\rho = \rho_o$. The values for the correction factors $(CF)_T$ and $(CF)_P$ are also obtainable through fluid property tables. It should also be noted that enthalpy and entropy values can also be determined in real-time by the same approach.

The logic functions required to determined the fluid density $\rho$ from the measurements of temperature T and pressure P are, as previously discussed, illustrated in Figure 1 for a single subregion (temperature T and pressure P) of operation. For multiple temperature and pressure subregions, the method of implementation is best described by an example. Consider a steam operating region having boundaries between 350-450°C and 4000-6000 kPa. Assume further that this operating region can be divided into four equal subregions shown at 1 to 4 in Figure 2. The fluid density $\rho$ will be calculated in this example, since it has a tendency to produce the greatest error.

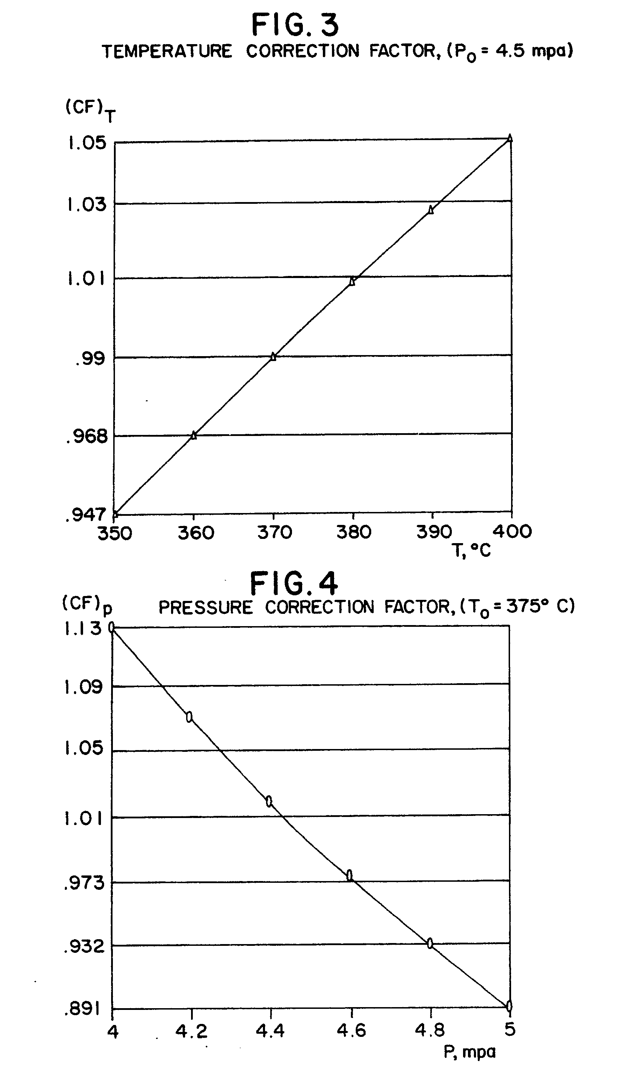

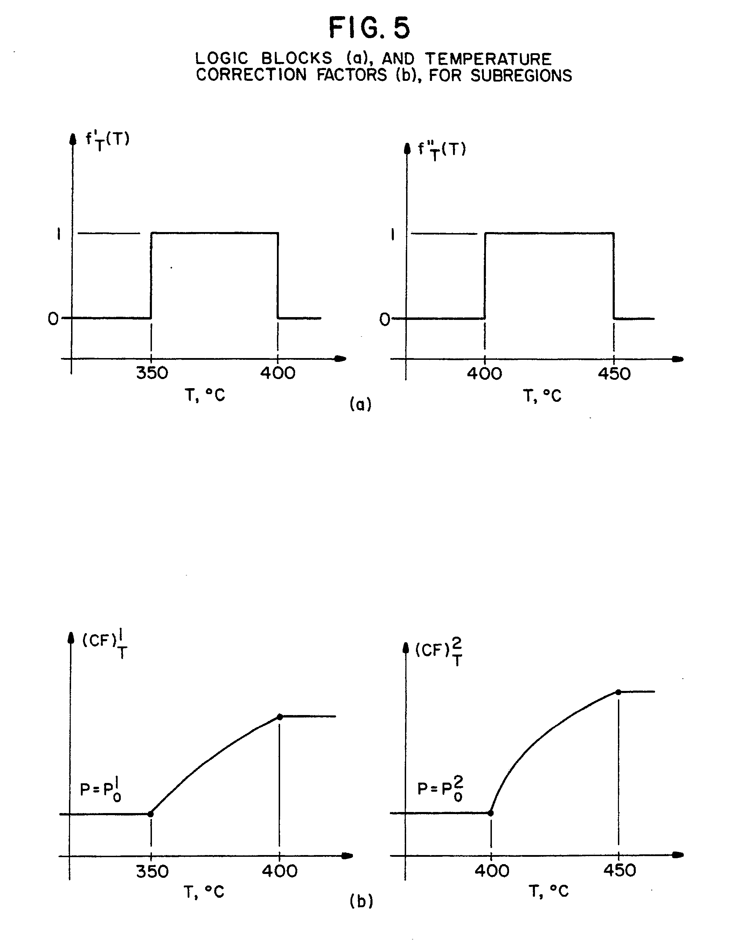

Considering the subregion 1 in Figure 2, the correction factors set forth in Equations (2) and (3) are illustrated in Figures 3 and 4, respectively. The functional relationships of the correction factors are produced by the function blocks 24 and 26 for temperature T and pressure P falling within the subregion 1. It should be noted that the reference values for the subregion 1 are $T_o$ = 375°C and $P_o$ = 4500 kPa.

The same approach can be taken for each of the subregions 2 to 4 in Figure 2. The temperature correction factors $(CF)_T^1$ and $(CF)_T^2$ for the subregions 1 and 2, respectively, are as shown in Figure 5 at (b), and the temperature logic representations $f_T'$ and $f_T''$ for the subregions 1 and 2, respectively, are as shown in Figure 5 at (a). Corresponding pressure logic representations $f_p'$ and $f_p''$ for the pressures 4000-5000 kPa and 5000-6000 kPa in the subregions 1 and 2, respectively, can be developed.

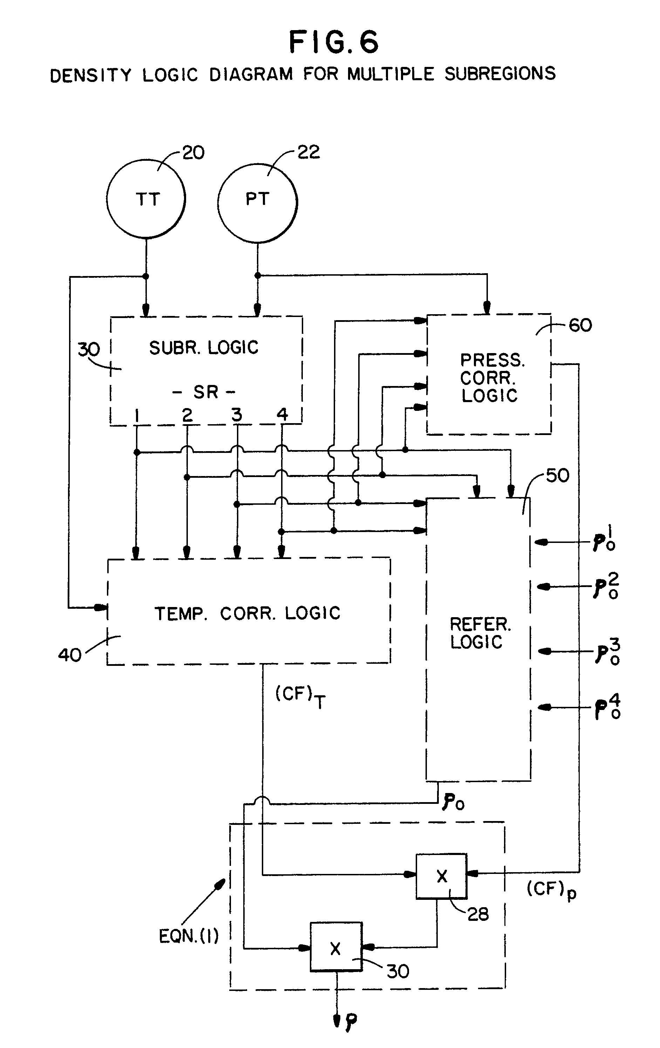

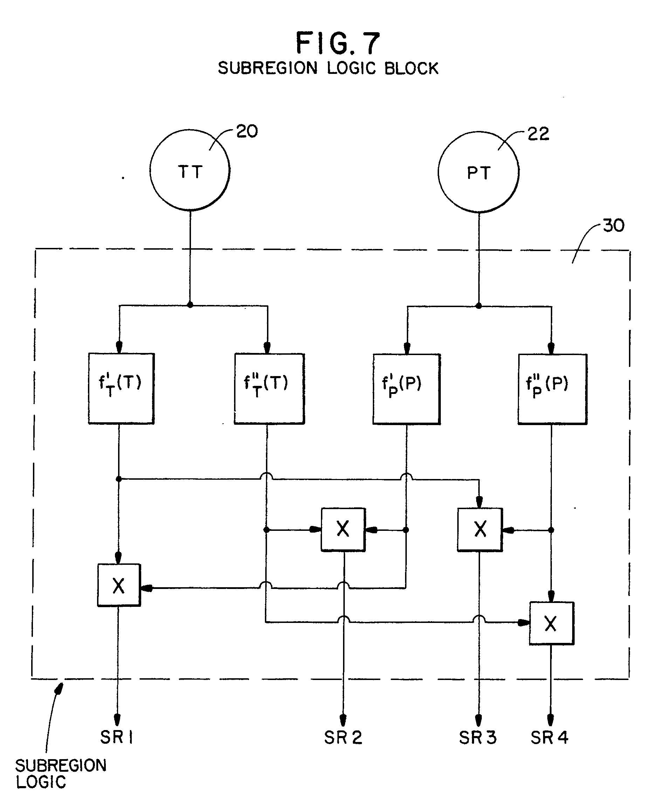

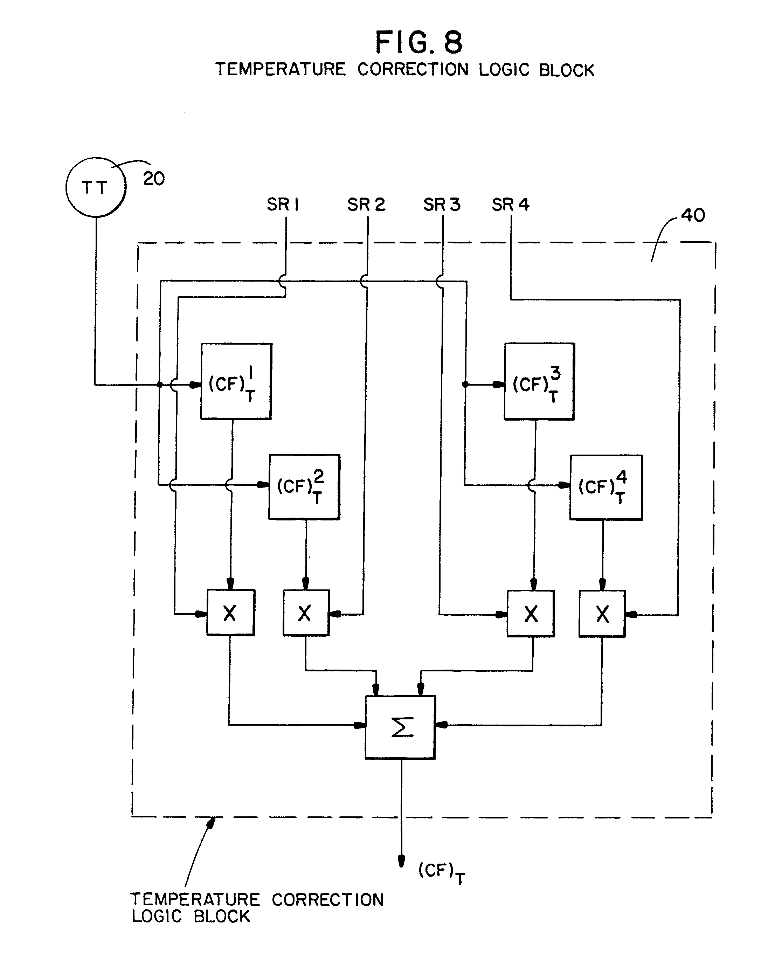

Figure 6 illustrates a logic diagram for determining the value of the density $\rho$ for multiple temperature and pressure subregions. As such, Figure 6 includes a subregion logic block 30, a temperature correction logic block 40, a reference logic block 50, a pressure correction logic block 60 and a portion of the logic diagram shown in Figure 1. The subregion logic block 30, illustrated in Figure 7, contains four logic functions: two for temperature, as shown in Figure 5 at (a), and two for pressure. Only one of the outputs of the subregion logic block 30 is actuated at a time, and the output that is actuated corresponds to the subregion determined by the temperature and pressure of the fluid being tested. The values of the other outputs of the subregion logic block 30 are zero. The outputs of the subregion logic block 30 are used as inputs to the temperature correction logic block 40, illustrated in Figure 8, which produces temperature correction factors. The temperature correction factor functions within the logic block 40 are arranged so as to receive the output signals produced by the subregion logic block 30 and to produce the proper value of the temperature correction factor $(CF)_T$ depending upon the subregion being utilised. In order to accomplish the foregoing, the temperature correction factor functions within the logic block 40 are biassed by the output of the temperature transmitter 20. It should be noted that the pressure correction factor $(CF)_P$ is determined in a similar manner in the pressure correction logic block 60.

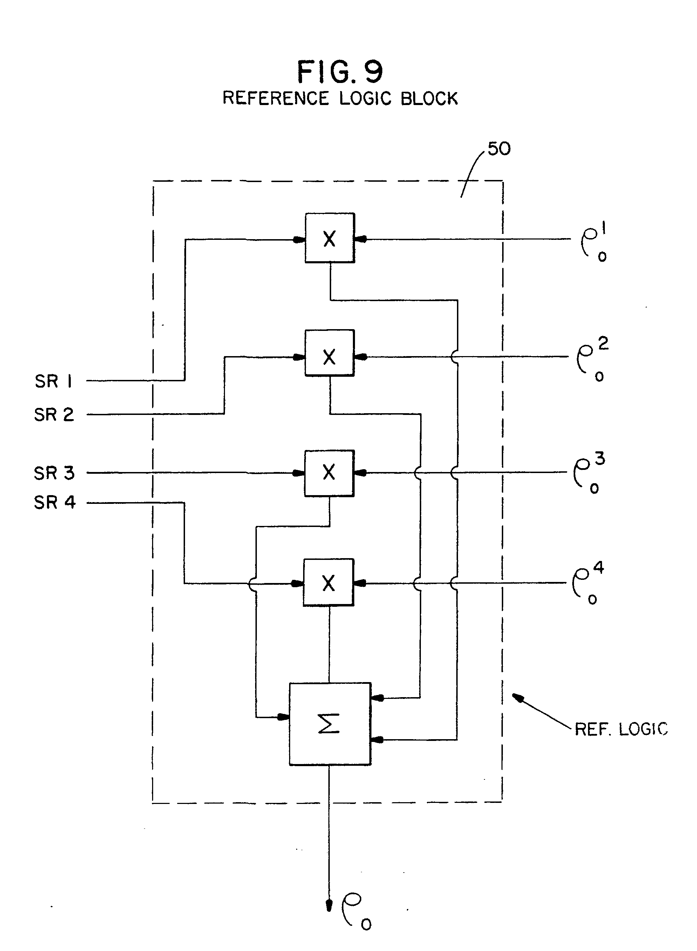

In a similar manner, the reference logic block 50, illustrated in Figure 9, is utilised to produce a reference density $\rho_o$ based upon the output of the subregion logic block 30 and the initial value of the fluid density $\rho_o$ for the subregion being utilised. The foregoing three output signals, $(CF)_T$, $(CF)_P$ and initial fluid density, are then combined as shown in Figure 6 and in accordance with Equation (1), to produce a measurement of the density $\rho$ of the fluid under test.

The accuracy of the resulting measurement of fluid density can be improved by implementing a modified form of Equation (1) which can be referred to as "dynamic correction", as shown below:

$$\rho = \rho_o [(CF)_T (CF)_p]^n \qquad (4),$$

where n is a function of temperature T and pressure P according to the following equation:

$$n = f(P, T) \qquad (5).$$

For a particular fluid, values of n are determined for different values of pressure P and temperature T and the minimum error between table values and calculated values are noted. In determining the foregoing function, a curve fitting procedure is used. Through experimentation for steam properties, it has been found that the values for n to provide the desired accuracy can be achieved when n is a function of T only as shown below:

$$n = f_T(T) \qquad (6).$$

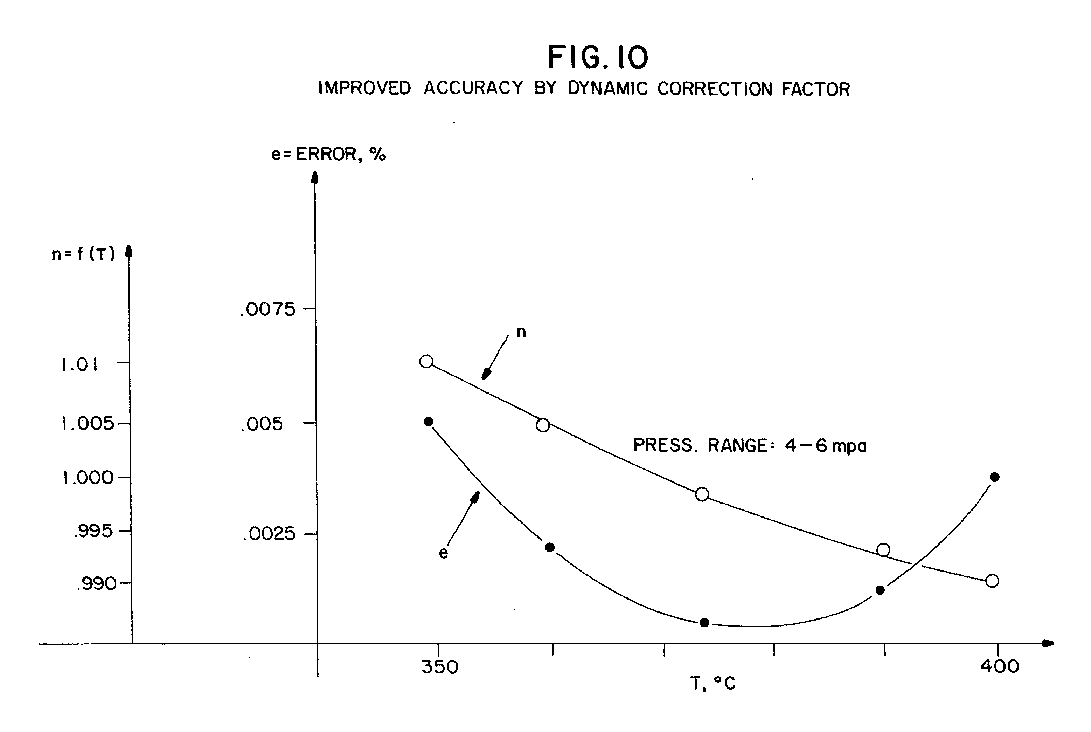

The improved accuracy obtained through "dynamic correction", along with a representation of the relationship $n = f_T(T)$, is illustrated by the curve in Figure 10.

It should be noted that measurement accuracy is greatly improved by using the form of Equation (4) instead of the form of Equation (1) in Figure 1. The details of providing the value of n for Equation (4) and implementing same is similar to what has been previously presented.

The foregoing method of measuring fluid properties has a number of advantages. For example, the accuracy of the resulting measurements is determined by the size of the measurement region and, thus, accuracy can be controlled. Considering steam as the fluid under test, a maximum error of within 0.01% is easily obtained for a measurement temperature range of 50°C and a measurement pressure range of 1 mPa. The total range of temperature and pressure does not affect the accuracy of the results inasmuch as the same temperature and pressure measurement ranges can be maintained by developing multiple pressure and temperature subregions. In addition, the foregoing "dynamic correction" factor is utilised to modify the values of the correction factors in order further to reduce measurement error. It has been found that, by using this correction factor, the maximum measurement error can be reduced by up to 50%. Thus, an accuracy of within 0.005% can be obtained through the use of the foregoing dynamic correction factor. It should be noted that such improved accuracy does not significantly increase costs.

In summary, the primary advantage of the foregoing method is an increased accuracy in the resulting fluid property measurements, which are in real-time. The resulting measurement accuracy is a significant improvement over the prior art approaches and results in increased product quality and energy efficiency.

## Claims

1. A method of determining the value of a property of a fluid, the method comprising the steps of: measuring (20) the temperature of the fluid; measuring (22) the pressure of the fluid; assigning said temperature measurement and said pressure measurement to a pre-determined temperature and pressure subregion; developing a temperature correction factor $((CF)_T)$ for the fluid; developing a pressure correction factor $((CF)_P)$ for the fluid; developing a reference value $(\rho_o)$ of the fluid property being measured; and combining said temperature correction factor $((CF)_T)$, said pressure correction factor $((CF)_P)$ and said reference value $(\rho_o)$ to determine the value of the fluid property being measured.

2. A method according to claim 1, wherein said temperature correction factor is determined by said temperature and pressure subregion.

3. A method according to claim 1 or claim 2, wherein said pressure correction factor is determined by said temperature and pressure subregion.

4. A method according to claim 1, claim 2 or claim 3, wherein said reference value of the fluid property being measured is determined by said temperature and pressure subregion.

5. A method according to any one of the preceding claims, including the step of utilising a dynamic correction factor to improve the accuracy of the resulting measurement of the fluid property being measured.

# FIG. I

## FUNCTION BLOCK DIAGRAM TO FIND DENSITY

# FIG. 2

## SUBREGIONS FOR IMPROVED ACCURACY

# FIG. 3
## TEMPERATURE CORRECTION FACTOR, ($P_0$ = 4.5 mpa)

# FIG. 4
## PRESSURE CORRECTION FACTOR, ($T_0$ = 375° C)

# FIG. 5

## LOGIC BLOCKS (a), AND TEMPERATURE
## CORRECTION FACTORS (b), FOR SUBREGIONS

(a)

(b)

# FIG.6

## DENSITY LOGIC DIAGRAM FOR MULTIPLE SUBREGIONS

# FIG. 7
## SUBREGION LOGIC BLOCK

SUBREGION
LOGIC

# FIG. 8
## TEMPERATURE CORRECTION LOGIC BLOCK

TEMPERATURE CORRECTION
LOGIC BLOCK

# FIG. 9
## REFERENCE LOGIC BLOCK

$\varrho_o^1$

$\varrho_o^2$

$\varrho_o^3$

$\varrho_o^4$

SR 1

SR 2

SR 3

SR 4

REF. LOGIC

$\varrho_o$

# FIG.10

IMPROVED ACCURACY BY DYNAMIC CORRECTION FACTOR

PRESS. RANGE: 4−6 mpa

## DOCUMENTS CONSIDERED TO BE RELEVANT

EP 90311605.1

| Category | Citation of document with indication, where appropriate, of relevant passages | Relevant to claim | CLASSIFICATION OF THE APPLICATION (Int. Cl.5) |
|---|---|---|---|
| A | DE - A1 - 3 709 876 (HAHN-MEITNER INSTITUT) * Abstract; claims; column 1, line 38 - column 2, line 27 * | 1 | G 01 N 9/00 |
| A | DE - B2 - 2 543 679 (AUTOMATION PRODUCTS INC.) * Claims; fig. 1 * | 1 | |
| A | DD - A1 - 256 367 (KOMINAT VEB) * Abstract; claim; page 3; fig. 1,2 * | 1 | |
| A | GB - A - 957 422 (MINNEAPOLIS HONEYWELL) * Totality * | 1 | |
| A | US - A - 4 745 807 (TIMOTHY P. O'NEILL) * Abstract; claims; fig. 1-6 * | 1 | TECHNICAL FIELDS SEARCHED (Int. Cl.5) |
| D,A | US - A - 4 244 216 (S.G. DUKELOW) * Totality * | 1-5 | G 01 K 17/00 G 01 N 9/00 G 01 N 33/00 |

The present search report has been drawn up for all claims

| Place of search | Date of completion of the search | Examiner |
|---|---|---|
| VIENNA | 22-03-1991 | ERBER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)